Europäisches Patentamt

European Patent Office

Office européen des brevets

(11) Publication number: **0 456 064 A2**

## (12) EUROPEAN PATENT APPLICATION

(21) Application number: 91106871.6

(51) Int. Cl.⁵: **B29C 47/30**, B29B 9/06

(22) Date of filing: 27.04.91

(30) Priority: **07.05.90 US 520297**

(43) Date of publication of application:
**13.11.91 Bulletin 91/46**

(84) Designated Contracting States:
**CH DE FR GB IT LI**

(71) Applicant: **THE BFGOODRICH COMPANY**
**3925 Embassy Parkway**
**Akron, OH 44313-1799(US)**

(72) Inventor: **Kim, Heung-Tai**
**23108 Roberts Run**
**Bay Village, Ohio 44140(US)**

(74) Representative: **Selting, Günther, Dipl.-Ing. et**
**al**
**Patentanwälte von Kreisler, Selting, Werner**
**Deichmannhaus am Hauptbahnhof**
**W-5000 Köln 1(DE)**

(54) **Extruder die.**

(57) A die plate for the continuous extrusion of molten thermoplastic resin, which plate has an upstream face and a downstream face that is substantially coplanar. Such die plate has an outer peripherial rim portion, a solid central portion or cone with a tapered upstream end tip and an annular perforated interconnecting portion with radial ribs to reinforce the full radial dimension.

FIG. 1

## BACKGROUND OF THE INVENTION

This invention relates to an extruder and more particularly to a new and improved die plate for use with an extruder which has a pelletizer located adjacent to the die plate for the purpose of pelletizing the thermoplastic synthetic resin as it is extruded through the die plate. Such conversion of the thermoplastic material into pellets facilitates the following steps of packaging and shipping.

The basic operation is to produce by extruding, strands of molten thermoplastic material which are then cut into short sections by severing the strands at the extruder's die plate outer face by a rotating cutter and thence immediately cool the cut strands or cubes with water below their melting point, otherwise the cubes of thermoplastic material would stick to each other.

During this cutting or pelletizing process a high pressure is generated at the extruder outlet end which tends to buckle the die plate and its outer surface, such that the pelletizing knives cannot cut the cubes or pellets cleanly. In addition a further problem encountered as a result of these higher pressures developed is that the die plate itself is weakened which shortens the life span of the die plate. The present invention provides a new and improved extruder die plate that is located closely adjacent to the extruder's downstream end portion and the extruder outlet end or bore to enhance the flow and provide sufficient strengthen to eliminate any buckling problems without need to increase the die plate's thickness.

## BRIEF SUMMARY OF THE INVENTION

It is an object of the present invention to provide a new and improved die assembly that is mounted on the outlet end of the extruder and closely adjacent to the downstream end of the extruder screw to enhance the flow of the extrudate even under high pressure without causing any distortion to the die itself.

## BRIEF DESCRIPTION OF THE DRAWINGS

To clearly illustrate this invention, reference will henceforth be made to the embodiment of this invention shown in the drawings. The embodiment, however, is merely illustrative of the invention and is not intended to limit the scope of this invention to the recited embodiment.

Fig. 1 is a side elevational view, partly in section of an extruder and die plate in accordance with the invention;

Fig. 2 is an enlarged sectional view of the forward downstream portion of the extruder and the die plate;

Fig. 3 is a front elevational view of the die plate taken on line 3-3 of Fig. 2;

Fig. 4 is a cross sectional view of the die plate taken on line 4-4 of Fig. 3;

Fig. 5 is a cross sectional view of the die plate taken on line 5-5 of Fig. 3.

## DESCRIPTION OF THE PREFERRED EMBODIMENT

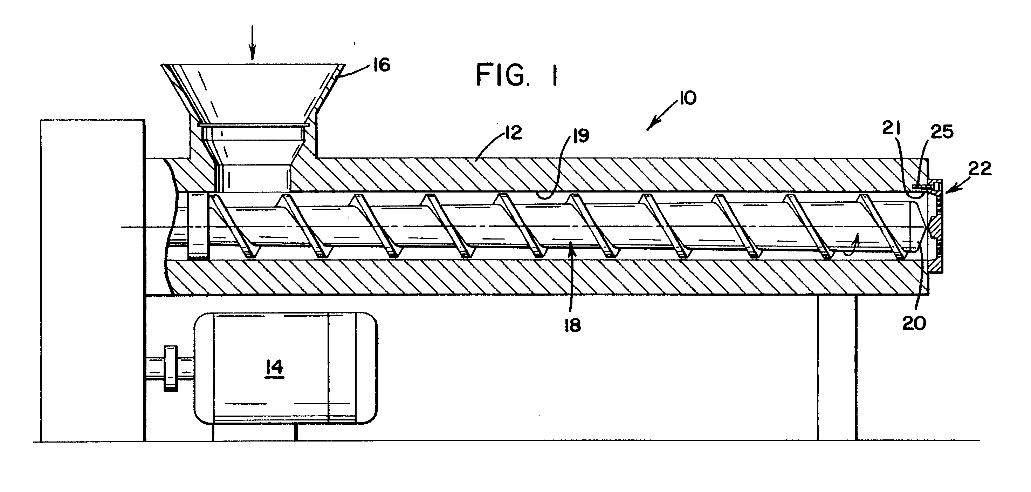

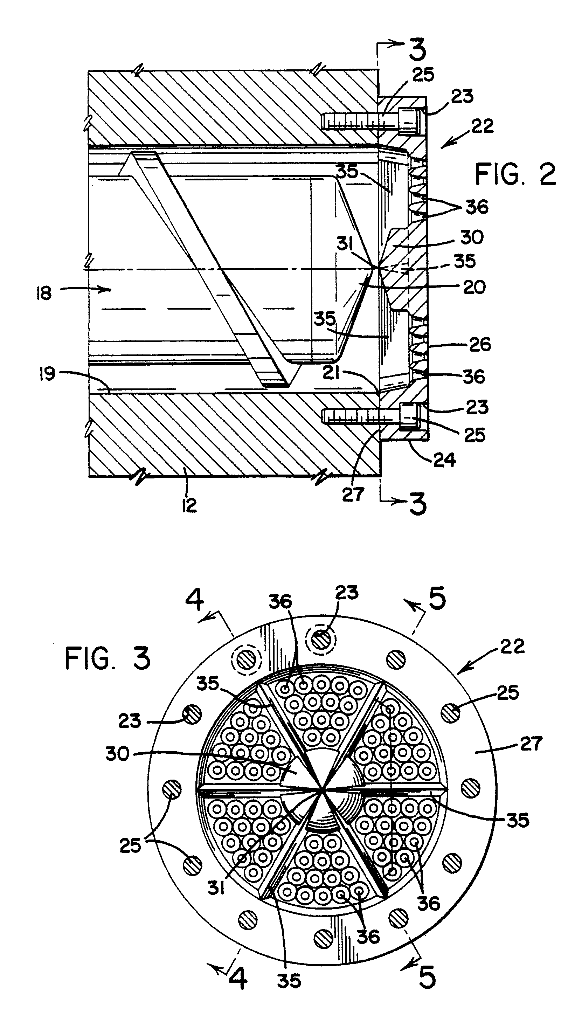

Referring to the drawings, wherein like reference numerals designate like or corresponding parts throughout the several views, there is shown in Fig. 1 an extruder 10 having an extruder barrel 12, a motor 14, a hopper 16 into which material such as unplasticized polymer is introduced, and a feed screw or helical screw 18 rotatably journaled within the cylindrical bore 19 of barrel 12. The feed screw 18 is driven or rotated by a suitable transmission means old and well known in the art by the motor 14. The feed screw 18 terminates with a tip end 20 adjacent to the outlet end or outlet bore 21 of the cylindrical bore 19 of barrel 12. The tip end 20 has a sharp taper as seen in cross section in Figs. 1 and 2.

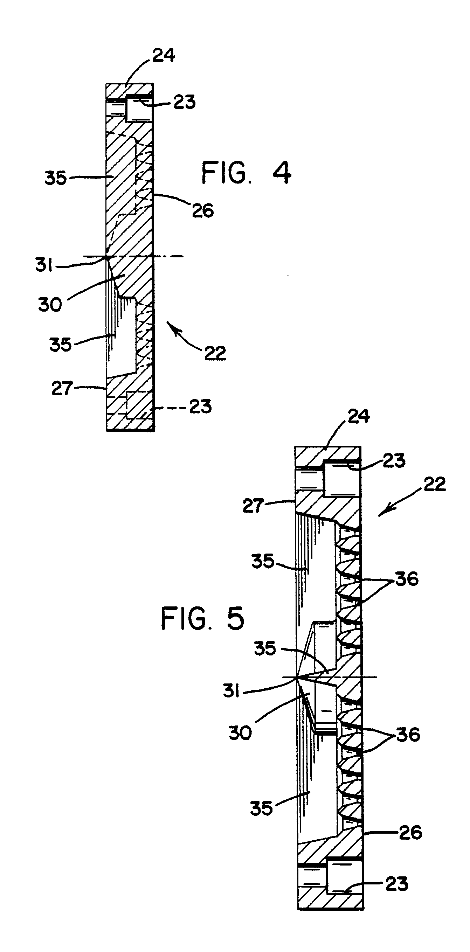

Mounted onto the outlet end or bore portion 21 of the extruder barrel 12 is a die plate 22 with a plurality of circumferentially spaced stepped bores 23 located along the outer peripheral rim portion 24 of die plate 22. The outer end portion of the extruder barrel 12 has a plurality of circumferentially spaced threaded bores in alignment with stepped bores 23 to receive bolts 25 to fasten such die plate 22 to the barrel 12. Die plate 22 has a downstream face 26 and an upstream face 27 (Fig. 5), which upstream face 27 abuts the annular end portion of the extruder barrel 12. The downstream face 26 and the upstream face 27 are so named in accordance with their position as disposed on the extruder and considering the flow of material through the extruder and die plate 22. The respective faces 26 and 27 are also the annular faces of the outer peripheral portion 24 of the die plate 22.

Die plate 22 has a solid central portion 30 with a sharp conical taper on its upstream surface and a flat surface on its downstream surface. The downstream surface is co planar with the downstream surface 26 of the outer peripheral portion 24 of die plate 22 while the outermost edge or tip 31 of the conical tapered portion of the central portion 30 is coplanar with the upstream surface 27 of the outer peripheral rim portion 24. A plurality of circumferentially spaced radial ribs 35 (Fig. 3) extend from the rim portion 24 into the solid central portion 30 and merges therewith. The die plate 22 between the circumferentially extending outer peripheral portion 24 and the central portion 30 is an annular interconnecting perforated plate section whose thickness is approximately half of the thickness of the outer peripheral portion 24 or the thickness of the central portion from the tip 31 to the downstream surface thereof that is coplanar with the downstream surface of the outer peripheral portion 24. Such annular perforated plate section of die plate 22 has a plurality of circumferentially spaced and radially spaced orifices 36 located between the radial ribs 35. The respective orifices taper outwardly towards the upstream side of the die plate 22 defining larger bore openings as shown in Figs. 2 and 3. As shown more clearly in Fig. 3, the radial dimension or length along a radial line of the plate section containing orifices 36 from the outer periphery of the central portion 30 to the inner periphery of outer portion 24 is greater than the radius of the central portion 30 or the radial dimension of the outer portion 24 to facilitate the flow of the extrudate through the die plate 22 which is further enhanced by the close adjacent proximity of the conical tapered upstream surface of central portion 30 and tapered end portion of the feed screw 18. With this construction, the location of the conical central portion 30, and the reinforcement of the die plate 22 by the radial ribs 35, such die plate 22 maintains a perfectly coplanar downstream surface 26 under high extrudate pressures generated at the end of the feed screw, assuring that the pelletizing knives operating in cooperation with such downstream surface 26 will provide a consist length of cut cubes or pellets along the entire annular interconnecting plate section of die plate 22 that contains the orifices 36.

It will be apparent that although a specific embodiment of the invention has been described in detail, the invention is not limited to the specifically illustrated and described constructions since variations may be made without departing from the principles of the invention.

## Claims

1. A die plate for the continuous extrusion of molten thermoplastic resin, having a downstream face and an upstream face, said die plate having an outer peripherally extending rim portion and a solid central portion, an annular plate section interconnecting said rim portion to said central portion, said plate section having a plurality of radial ribs extending from said rim portion to said central portion, a plurality of orifices in said plate section disposed between said ribs.

2. A die plate as set forth in claim 1 wherein said downstream face of said rim portion and said plate section are coplanar.

3. A die plate as set forth in claim 2 wherein said downstream face of said rim portion and said central portion are coplanar.

4. A die plate as set forth in claim 3 wherein said orifices taper outwardly from said downstream face to said upstream face.

5. A die plate as set forth in claim 1 wherein said upstream central portion is cone shaped.

6. A die plate as set forth in claim 5 wherein the terminal end of said upstream cone shaped central portion has a sharp tip that is substantially coplanar with said upstream face of said rim portion.

7. A die plate as set forth in claim 6 wherein the downstream face of said central portion is coplanar with said upstream face of said die plate.

8. An extruder of the type including an extruding cylinder with an outlet bore at the downstream end thereof and an extruder screw rotatably disposed in said cylinder and circumferentially formed with a feed flight member for forwarding a plasticized material through said outlet bore of the cylinder, said outlet having a central axis, said extruder screw having a forwardly disposed end portion with a tip end, a die plate mounted on said cylinder at said outlet bore and closely adjacent to said end portion of said extruder screw, said die plate having a solid central portion whose center lies along the axial extension of said central axis, said die plate having a solid outer peripherally extending rim portion, an annular perforated plate interconnecting said central portion to said outer rim portion, said annular plate having a plurality of orifices, and a plurality of circumferentially spaced ribs on said annular plate interconnecting and reinforcing said central portion to said outer rim portion.

9. An extruder as set forth in claim 8 wherein said upstream end of said central portion is cone shaped defining an end tip, and the cross sectional shape of said cone shape substends an obtuse included angle.

10. An extruder as set forth in claim 9 wherein said end portion of said extruder screw has a tapered end whose tapered sides make an obtuse included angle, and said tapered end portion of said extruder screw has a tip end that lies closely adjacent to said end tip of said cone shaped central portion.

**11.** An extruder as set forth in claim 10 wherein each of said orifices taper outwardly from said downstream face to said upstream face.

FIG. 1

EP 0 456 064 A2

FIG. 2

FIG. 3

FIG. 4

FIG. 5